Europäisches Patentamt

European Patent Office

Office européen des brevets

(19)

(11) Numéro de publication : **0 457 996 B1**

(12) **FASCICULE DE BREVET EUROPEEN**

(45) Date de publication du fascicule du brevet :
30.12.92 Bulletin 92/53

(51) Int. Cl.⁵ : **E05B 9/00**

(21) Numéro de dépôt : **90440041.3**

(22) Date de dépôt : **14.05.90**

(54) **Dispositif d'assemblage de la têtière et du ou des boîtiers d'une ferrure de verrouillage telle que serrure, crémone, crémone-serrure ou analogue.**

(30) Priorité : **23.05.89 FR 8906893**

(43) Date de publication de la demande :
**27.11.91 Bulletin 91/48**

(45) Mention de la délivrance du brevet :
**30.12.92 Bulletin 92/53**

(84) Etats contractants désignés :
**AT BE CH DE DK ES GB GR IT LI NL SE**

(56) Documents cités :
**EP-A- 0 043 337
DE-A- 2 212 772
DE-A- 2 705 213
DE-U- 8 700 071
GB-A- 626 257**

(73) Titulaire : **FERCO INTERNATIONAL Usine de Ferrures de Bâtiment Société à responsabilité limitée
2, rue du Vieux-Moulin Reding
F-57400 Sarrebourg (FR)**

(72) Inventeur : **Prévot, Gérard
39, rue de Herbitzheim
F-57430 Willerwald (FR)**

(74) Mandataire : **Aubertin, François
Cabinet Lepage & Aubertin Innovations et Prestations 4, rue de Haguenau
F-67000 Strasbourg (FR)**

EP 0 457 996 B1

## Description

L'invention concerne une ferrure de verrouillage, telle que serrure, crémone, crémone-serrure ou autre, comprenant au moins un boîtier présentant deux parois parallèles et rapporté sur la face interne d'une têtière au moyen de cavaliers en forme de tronçons de profilé de section en "U" composés de deux ailes parallèles et d'une paroi transversale rendue solidaire, par rivetage, de la face interne de ladite têtière.

La présente invention trouvera son application, plus particulièrement, dans le domaine de la quincaillerie du bâtiment.

En fait, on connaît déjà un certain nombre de ferrures de verrouillage, telles que serrure, crémone, crémone-serrure ou analogue, leurs caractéristiques étant généralement dépendantes des fonctions qu'elles sont amenées à assurer. Toutefois, en raison de leur montage encastré dans le chant avant de l'ouvrant d'une porte, fenêtre ou analogue, ces ferrures de verrouillage, quelles que soient leurs caractéristiques, présentent un certain nombre de points communs.

Notamment, elles comportent, en général, une têtière destinée à être apposée sur ledit chant avant de l'ouvrant permettant, en somme, de rendre solidaire la ferrure de verrouillage de ce dernier. Par ailleurs, cette têtière vient à recouvrir un mécanisme de commande inséré dans un boîtier et intervenant sur le déplacement d'éléments de verrouillage tels que pêne demi-tour, pêne dormant, tringles de manoeuvre ou autres. Ce boîtier, muni de son mécanisme de commande est disposé dans un entaillage pratiqué dans le chant avant de l'ouvrant. Il est, par ailleurs, composé de deux parois parallèles rendues solidaires au niveau de leur chant avant, de la face interne de la têtière précitée, ou, selon un second mode d'exécution, l'une des parois est fixée, au niveau de son chant avant, sur ladite face interne de la têtière, alors que l'autre paroi est rendue solidaire de la première par vissage ou rivetage.

Plus précisément, les procédés, actuellement mis en oeuvre, pour rendre solidaires les parois d'un boîtier de la têtière d'une ferrure de verrouillage, présentent un certain nombre d'inconvénients auxquels la présente invention se propose d'apporter une solution, notamment, pour les boîtiers pré-assemblés.

En effet, en raison de l'exposition à l'air ambiant, donc à l'humidité, de ces têtières, il est obligatoire de leur appliquer un revêtement de type anti-corrosion par immersion dans un bain électrolytique. Or, un tel traitement de surface n'autorise aucune soudure effectuée après coup sans quoi la qualité du revêtement de protection anti-corrosion viendrait, automatiquement, à se détériorer.

Aussi, lorsque les parois du boîtier sont destinées à être soudées sur la têtière, tel que ceci est habituellement le cas, il est indispensable de réaliser cette opération de soudure avant de procéder au traitement de surface de ladite têtière. Ceci n'est guère possible ni envisageable pour des boîtiers pré-assemblés, puisqu'on serait amené à traiter le mécanisme, et rendre, ainsi, son fonctionnement difficile. De plus, ce boîtier étant encastré dans le chant avant de l'ouvrant est protégé par la têtière, il est moins soumis aux agents corrosifs.

En conséquence, une liaison par soudure du boîtier sur la têtière d'une ferrure de verrouillage impose une surconsommation inutile de composants du bain électrolytique et un vieillissement accéléré de l'appareillage de la mise en oeuvre de ce traitement de surface. Sans compter qu'en raison de l'encombrement en général des têtières munies de leurs boîtiers, le nombre des pièces traitées simultanément est obligatoirement limité. Il en résulte, bien évidemment, un coût de revient particulièrement élevé de ces ferrures de verrouillage.

On notera, également au passage, que l'opération de soudure impose, dans la plupart des cas, une compatibilité des matériaux à assembler. Or une telle condition peut représenter un surcoût considérable de la ferrure de verrouillage dans des cas bien particuliers, notamment, lorsque celle-ci est destinée à une utilisation dans un environnement particulièrement corrosif. En effet, dans ces conditions, il est fréquent de concevoir la têtière en un matériau inoxydable. Or en raison de la contrainte exposée ci-dessus, il est imposé au fabricant de réaliser, également, le boîtier normalement protégé, en un tel matériau inoxydable.

De manière à remédier aux inconvénients précités, il existe une autre méthode, également communément utilisée, pour rendre solidaire le ou les boîtiers d'une ferrure de verrouillage de la têtière. Cette méthode consiste, précisément, à procéder au rivetage dudit boîtier sur la têtière, celle-ci présentant, à cet effet, des ouvertures susceptibles d'accueillir des moyens de rivetage tels que tétons, languettes ou autres solidaires du chant avant des parois parallèles constituant les boîtiers.

L'avantage d'une telle méthode consiste en ce que l'opération de rivetage peut être réalisée après avoir fait subir à la têtière un revêtement de surface sans, pour autant altérer, excessivement, ce dernier. Cependant, elle présente également, un certain nombre d'inconvénients, résidant, notamment, dans le fait que les moyens de rivetage tels que tétons, languettes ou autres, sont apparents sur la face externe de la têtière et, en conséquence, sont exposés à la corrosion, d'une part, et confèrent un aspect peu esthétique à la ferrure de verrouillage, d'autre part.

Par ailleurs, on connaît, également, par le document FR-A-2.619.407, un dispositif de fixation d'un boîtier sur une têtière d'une ferrure de verrouillage faisant appel à des moyens de rivetage constitués par des tétons se présentant saillants par rapport à la face interne de la têtière. Sur ces moyens de rivetage ou tétons est emboîté ledit boîtier qui, dans ce cas, présente une configuration spécifique. En effet, il est composé, nécessairement, d'une part, d'un coffre pourvu de moyens de liaison susceptibles de coopérer avec les moyens de rivetage solidaires de la têtière et, d'autre part, d'un couvercle recouvrant ledit coffre et rendu solidaire de ce dernier par des organes de fixation tels que vis, rivets ou analogues.

En somme, en raison de cette conception spécifique du boîtier de la ferrure de verrouillage et de l'opération de rivetage qu'il s'agit de réaliser au niveau de la face interne de la têtière par l'intermédiaire d'outils spécifiques, il n'est possible d'assurer le montage du mécanisme de commande de la ferrure de verrouillage dans le boîtier qu'après assemblage du coffre de ce dernier sur ladite têtière. En conséquence, cette solution ne peut pas convenir à des boîtiers pré-assemblés.

On connaît, en outre, par le document DE-A-2.212.772 un autre dispositif de fixation pour boîtier de serrure, crémone, crémone-serrure ou analogue sur une têtière. En particulier, cette têtière peut être équipée, au niveau de sa face interne et par l'intermédiaire d'un procédé de rivetage, d'organes de liaison destinés à coopérer avec les parois composant ledit boîtier afin de rendre ce dernier solidaire de cette têtière.

Différents modes de réalisation de ces organes de liaison ont été révélés dans ce document antérieur. Ainsi, certains d'entre eux coopèrent avec lesdites parois du boîtier au travers d'organes de fixation, tels que vis ou analogues, d'autres ne nécessitant qu'un simple emboîtement dudit boîtier. Dans ce dernier cas, lesdits organes de liaison sont munis de languettes susceptibles de s'insérer dans des ouvertures pratiquées dans les parois latérales composant le boîtier et à s'opposer, ainsi, au retrait de ce dernier par rapport à la têtière.

On remarquera, dans le cadre de cet état antérieur de la technique, que les organes de liaison, en raison de leur conception spécifique, présentent, un certain nombre d'inconvénients conduisant, soit à un temps de montage accru, soit à un assemblage boîtier-têtière peu fiable.

En effet, en cas de liaison par vissage, un tel assemblage nécessite l'usinage d'un alésage suivi d'un taraudage afin d'autoriser la coopération avec la vis de fixation.

Par ailleurs, le vissage est une opération d'exécution difficile au moyen d' automates de montage, en raison précisément, de la présence d'une vis qu'il convient de positionner, parfaitement, au droit de l'orifice taraudé ou de l'écrou avant de lui conférer un mouvement de rotation autour de son axe.

En conséquence, cette conception spécifique des organes de liaison, faisant appel à des éléments de fixation tels que vis, n'est nullement adaptée à une fabrication en grande série au moyen d'outillage moderne faisant appel à l'automatisation.

Quant à la solution de l'emboîtement ou encliquetage du boîtier sur la têtière au travers des organes de liaison, celle-ci paraît non adaptée à des ferrures destinées à supporter des efforts importants et, notamment, à des crémones ou crémones-serrures.

La présente invention a pour but de remédier à l'ensemble des inconvénients précités.

L'invention telle qu'elle est caractérisée dans les revendications résout le problème exposé ci-dessus et consiste à prévoir une ferrure de verrouillage telle que serrure, crémone, crémone-serrure ou autre, comprenant au moins un boîtier présentant deux parois parallèles et rapporté sur la face interne d'une têtière au moyen de cavaliers en forme de tronçons de profilé de section en "U" composés de deux ailes parallèles et d'une paroi transversale rendue solidaire, par rivetage, de la face interne de ladite têtière, cette ferrure étant caractérisée en ce que les ailes parallèles des cavaliers constituent des moyens susceptibles d'agripper les parois parallèles du boîtier et, à cet effet :

- s'insèrent dans des évidements aménagés au droit de ces derniers dans la face externe des parois parallèles du boîtier de manière à se présenter à fleur avec ladite face externe de ces parois parallèles :
- comportent, au niveau de leur extrémité libre, au moins une languette venant à coopérer avec la face interne des parois parallèles du boîtier :
- et sont munies au niveau de leurs chants latéraux de pattes venant se situer, après emboîtement du boîtier sur lesdits cavaliers, au droit d'ouvertures, aménagées dans les parois parallèles, afin d'y être refoulées mécaniquement.

Les avantages principaux obtenus grâce à cette invention consistent en ce que l'on dispose, au niveau de la têtière, de réels moyens susceptibles d'agripper convenablement les parois parallèles d'un boîtier pré-assemblé. De plus, ces moyens peuvent être associés à la têtière après avoir fait subir à cette dernière un traitement de surface. Par ailleurs, ils autorisent, d'une part, un assemblage automatisé et, d'autre part, une certaine standardisation de la fabrication contribuant à une diminution des stocks. En effet, ils permettent la réalisation de boîtiers standards pré-assemblés lesquels s'adapteront à diverses applications faisant intervenir des têtières, des moyens de verrouillage ou encore des tringles de manoeuvre de caractéristiques différentes.

D'autres buts et avantages de la présente invention apparaîtront au cours de la description qui va suivre. Celle-ci est accompagnée de dessins représentant seulement un mode de réalisation.

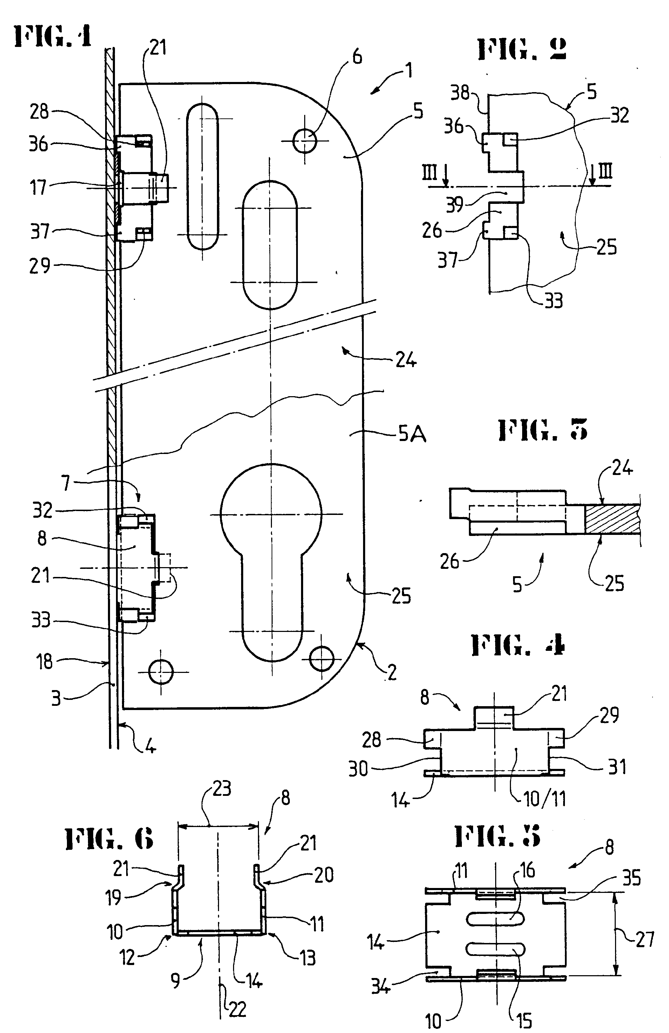

- La figure 1 représente une vue schématisée, en plan et en coupe partielle d'une têtière pourvue d'un boîtier, correspondant à la ferrure de verrouillage conforme à l'invention ;

- La figure 2 représente une vue de détail d'une des parois composant le boîtier tel que représenté dans la figure 1 ;

- la figure 3 représente une vue en coupe selon III-III de la figure 2 ;

- la figure 4 représente une vue schématisée et de face des moyens susceptibles d'agripper les parois parallèles d'un boîtier renfermant le mécanisme de commande d'une ferrure de verrouillage ;

- la figure 5 est une vue de gauche de la figure 4 ;

- la figure 6 est une vue de dessus de la figure 4.

La présente invention est relative à une ferrure de verrouillage 1 telle que serrure, crémone, crémone-serrure ou autre destinée à être encastrée dans le chant avant de l'ouvrant d'une porte, fenêtre ou analogue. Aussi, cette ferrure de verrouillage 1 comporte au moins un boîtier 2 servant de logement à un mécanisme de commande (non représenté) susceptible d'agir sur un ou plusieurs éléments de verrouillage tels qu'un pêne demi-tour, pêne dormant, tringles de manoeuvre ou analogues. Bien entendu, le nombre de boîtiers 2 que comporte une ferrure de verrouillage 1 dépend, plus précisément, des caractéristiques de cette dernière. Dans tous les cas, le ou les boîtiers 2 sont rendus solidaires d'une têtière 3, plus exactement, de la face interne 4 de celle-ci destinée à venir en applique sur le chant avant de l'ouvrant.

Il convient de préciser que le ou les boîtiers 2 se composent, principalement, de deux parois parallèles 5, 5A rendues solidaires l'une de l'autre par l'intermédiaire d'entretoises 6 et délimitant un espace interne réservé au mécanisme de commande précité.

En fait et selon l'invention, la liaison du ou des boîtiers 2 sur la têtière 3 est assurée par l'intermédiaire de moyens 7 susceptibles d'agripper lesdites parois parallèles 5, 5A, ces moyens 7 étant, initialement, rapportés par rivetage sur la face interne 4 de ladite têtière 3.

Selon un mode de réalisation préférentiel de la présente invention, représenté dans les différentes figures, les moyens 7 sont constitués de cavaliers 8 répartis sur la face interne 4 de la têtière 3, au droit du ou des boîtiers 2. En fait, ces cavaliers 8 sont constitués de tronçons de profilé 9 de section en forme de "U" comprenant deux ailes parallèles 10, 11 rendues solidaires, au niveau de leur extrémité 12, 13, d'une paroi transversale 14.

Cette dernière est destinée, plus précisément, à venir en applique sur la face interne 4 de la têtière 3 de manière à y être riveté. A cet effet, ladite paroi transversale 14 comporte des ouvertures 15, 16 servant de passage à des moyens de rivetage 17 tels que tétons ou languettes solidaires de la face interne 4 de la têtière 3. On précisera, à ce propos, que lesdits moyens de rivetage 17 et, notamment, les tétons ou les languettes peuvent être obtenus par un simple refoulement de matière, depuis la face externe 18 de ladite têtière 3 lors du façonnage et de l'emboutissage de cette dernière.

Quant aux ailes parallèles 10, 11 de ces cavaliers 8, celles-ci ont pour fonction principale d'agripper les parois parallèles 5, 5A du ou des boîtiers 2. A cet effet, lesdites ailes parallèles 10, 11 comportent au niveau de leur extrémité libre 19, 20, au moins une languette 21. Celle-ci se situe, par rapport auxdites ailes parallèles 10, 11, dans des plans légèrement décalés et, ce, en direction du plan médian longitudinal 22 du tronçon de profilé 9 que constituent les cavaliers 8. En fait, l'écartement 23 des languettes 21 correspondant aux ailes parallèles 10, 11, est déterminé de telle sorte que lesdites languettes 21 soient en mesure de s'insérer dans le boîtier 2 entre les parois parallèles 5, 5A et de coopérer avec la face interne 24 de ces dernières tandis que le ailes parallèles 10, 11 proprement dites, des cavaliers 8, sont destinées, plus précisément, à coopérer avec la face externe 25 de ces parois parallèles 5, 5A du ou des boîtiers 2. Toutefois, de manière à éviter un entaillage de largeur plus importante dans le chant avant d'un ouvrant en raison d'un surcroît d'épaisseur que pourrait produire l'apposition des ailes parallèles 10, 11 des cavaliers 8, directement sur la face externe 25 des parois parallèles 5, 5A, celles-ci sont embouties au droit de ces cavaliers 8. Ceci permet de définir des évidements 26, au niveau de la face externe 25 de ces parois parallèles 5, 5A susceptibles d'accueillir lesdites ailes parallèles 10, 11. Dans ces évidements 26 sont réalisées, par ailleurs, des découpes 39 permettant le passage des languettes 21 des ailes 10, 11 et, finalement, autorisant auxdites languettes 21 d'accéder au niveau de la face interne 24 des parois parallèles 5, 5A. Ainsi, les ailes 10, 11 sont en mesure de se présenter à fleur avec la face externe 25 des parois parallèles 5, 5A, du ou des boîtiers 2, ceux-ci conservant dans ces conditions une épaisseur standard. En somme, l'écartement 27 des ailes parallèles 10, 11 d'un cavalier 8 est sensiblement égal à l'écartement respecté par les parois parallèles 5, 5A du ou des boîtiers 2 de la ferrure de verrouillage 1.

Les moyens 7 que constituent les cavaliers 8 et qui sont à même d'agripper ces parois parallèles 5, 5A du ou desdits boîtiers 2 sont complétés, en outre, par des pattes 28, 29 déformables mécaniquement, et rendues solidaires des chants latéraux 30, 31 des ailes parallèles 10, 11. En fait, ces pattes 28, 29 sont destinées à être repoussées dans des ouvertures 32, 33 aménagées dans ces parois parallèles 5, 5A du ou des boîtiers 2. Plus précisément, après emboîtement de ce ou ces derniers sur leurs cavaliers 8 respectifs, de sorte que, d'une part, les languettes 21 coopèrent avec la face interne 24 des parois parallèles 5, 5A et que, d'autre part, les ailes parallèles 10, 11 se situent dans les évidements 26 aménagés sur leur face externe 25, les ouvertures 32, 33 se présentent au droit des pattes 28, 29 qu'il s'agira alors, de replier en direction du boîtier 2.

De manière à faciliter le montage du ou des boîtiers 2 sur la têtière 3 et garantir leur parfait positionnement par rapport à cette dernière, la paroi transversale 14 des cavaliers 8 comporte, en outre, des réservations 34, 35 susceptibles d'accueillir des languettes de positionnement 36, 37 solidaires du chant avant 38, orienté en direction de la têtière 3, des parois parallèles 5, 5A.

En somme, lors du montage du ou des boîtiers 2 d'une ferrure de verrouillage sur une têtière 3, on procède initialement, au rivetage des cavaliers 8 sur la face interne 4 de cette dernière puis, après traitement de surface, on insère lesdits boîtiers 2 dans leurs cavaliers 8 respectifs avant d'en assurer la liaison définitive en procédant au refoulement des pattes 28, 29 dans les ouvertures 32, 33 correspondantes.

Un tel procédé d'assemblage, faisant intervenir des moyens 7 conformes à l'invention, et susceptibles d'agripper les parois parallèles 5, 5A du ou des boîtiers 2, permet, en définitive, de traiter, individuellement, les têtières 3 contre la corrosion puis d'apposer, au niveau de leur face interne 4, un ou des boîtiers 2 pré-assemblés sans que des marques de rivetage apparaissent sur la face externe 18 de ces têtières 3.

La présente invention apporte, ainsi, une solution à l'ensemble des problèmes rencontrés jusqu'à présent dans le cadre de l'assemblage du ou des boîtiers 2 d'une ferrure de verrouillage sur leur têtière.

## Revendications

1. Ferrure de verrouillage telle que serrure, crémone, crémone-serrure ou autre, comprenant au moins un boîtier (2) présentant deux parois parallèles (5, 5A) et rapporté sur la face interne (4) d'une têtière (3) au moyen de cavaliers (8) en forme de tronçons de profilé (9) de section en "U" composés de deux ailes parallèles (10, 11) et d'une paroi transversale (14) rendue solidaire, par rivetage, de la face interne (4) de ladite têtière (3), ferrure caractérisée par le fait que les ailes parallèles (10, 11) des cavaliers (8) constituent des moyens susceptibles d'agripper les parois parallèles (5, 5A) du boîtier (2) et, à cet effet :
   - s'insèrent dans des évidements (26) aménagés au droit de ces derniers dans la face externe (25) des parois parallèles (5, 5A) du boîtier (2) de manière à se présenter à fleur avec ladite face externe (25) de ces parois parallèles (5, 5A) ;
   - comportent au niveau de leur extrémité libre, au moins une languette (21) venant à coopérer avec la face interne (24) des parois parallèles (5, 5A) du boîtier (2) ;
   - et sont munies, au niveau de leurs chants latéraux (30, 31) de pattes (28, 29) venant se situer, après emboîtement du boîtier sur lesdits cavaliers (8), au droit d'ouvertures (32, 33), aménagées dans les parois parallèles (5, 5A), afin d'y être refoulées mécaniquement.

2. Ferrure de verrouillage selon la revendication 1, caractérisée par le fait que les languettes (21) se situent, par rapport aux ailes parallèles (10, 11) dans des plans sensiblement décalés en direction du plan médian longitudinal (22) des cavaliers (8), lesdites languettes (21) respectant, en outre un écartement (23) correspondant à l'espacement interne délimité par les parois parallèles (5, 5A) du ou des boîtiers (2).

3. Ferrure de verrouillage selon la revendication 2, caractérisée par le fait qu'au niveau des évidements (26) aménagés au droit des cavaliers (8) dans la face externe (25) des parois parallèles (5, 5A) est réalisée une découpe (39) servant au passage de la languette (21).

4. Ferrure de verrouillage selon la revendication 1, caractérisée par le fait que la paroi transversale (14) des cavaliers (8) comporte des réservations (34, 35) servant de passage à des languettes de positionnement (36, 37) solidaires du chant avant (38) des parois parallèles (5, 5A) du boîtier (2).

## Patentansprüche

1. Verrriegelungsbeschlag wie Treibriegelbeschlag, kantengetriebe oder dgl., mit mindestens einem Gehäuse (2) mit zwei parallelen Wänden (5,5A), das an der Innenfläche (4) einer Stulpschiene (3) mittels konsolen (8) befestigt ist, die die Form von U-Profilstücken (9) aufweisen, mit zwei parallelen Schenkeln (10, 11) und einer Querwand (14), die an der Innenfläche der Stulpschiene (3) durch Nietung befestift ist, **dadurch gekennzeichnet,** daß die parallelen Schenkel (10, 11) der konsole (8) Mittel zum Verankern der parallelen Wände (5,5A) des Gehäuses (2) bilden und zu diesem Zweck:
   - sich in Vertiefungen (26), die an dieser Stelle in der Außenfläche (25) der parallelen Wände (5,5A) des Gehäuses (2) ausgebildet sind, derart einlegen, daß sie bündig mit der Außenfläche (25) die parallelen Wände (5,5A) sind;
   - im Bereich ihres freien Endes mindestens eine Zunge (21) aufweist, die mit der Innenfläche (24) der parallelen Wände (5,5A) des Gehäuses (2) zusammenwirkt;

- und an ihren seitlichen kanten (30, 31) mit Lappen (28, 29) versehen sind, die sich nach dem Aufsetzen des Gehäuses auf die konsole im Bereich von in den parallelen Enden (5,5A) angebrachten Öffnungen (32, 33) befinden, um in diesen mechanisch umgebogen zu werden.

2. Verriegelungsbeschlag nach Anspruch 1, **dadurch gekennzeichnet,** daß die Zungen (21) relativ zu den parallelen Schenkeln (10, 11) in im wesentlichen zur Richtung der longitudenalen Mittelebene der konsole (8) versetzten Ebenen angeordnet sind, wobei die Zungen (21) ferner einen Abstand (23) bilden, welcher dem durch die parallelen Wände (5,5A) des Gehäuses oder der Gehäuse (2) begrenzten Raum lichten Breite entspricht.

3. Verriegelungsbeschlag nach Anspruch 2, **dadurch gekennzeichnet,** daß sich im Bereich der Vertiefungen (26), die im Bereich der konsole (8) in der Außenfläche (25) der parallelen Wände (5,5A) angebracht sind, ein Ausschnitt (39) befindet, der als Durchgang für die Zunge (21) dient.

4. Verriegelungsbeschlag nach Anspruch 1, **dadurch gekennzeichnet,** daß die Querwand (14) der konsolen (8) Aussparungen (34, 35) aufweist, die als Durchgang für Positionierzungen (34, 35) dienen, die an der vorderen kante (28) der parallelen Wände (5,5A) des Gehäuses (2) vorgesehen sind.

## Claims

1. Locking device such as a lock, espagnolette, bolt lock or the like, including at least one box (2) having two parallel walls (5, 5A) and inserted onto the inner face (4) of a face-plate (3) by means of riders (8) in the shape of profile lengths (9) with a "U"-shaped cross-section comprised of two parallel wings (10, 11) and a transversal wall (14) made integral, through rivetting, with the inner face (4) of said face-plate (3), device characterized in that the parallel wings (10, 11) of the riders (8) form means capable of gripping the parallel walls (5, 5A) of the box (2) and, to this end:

   - engage into recesses (26) made in front of these latter in the outer face (25) of the parallel walls (5, 5A) of the box (2) so as to be flush with said outer face (25) of these parallel walls (5, 5A),
   - include, at the level of their free end, at least one lip (21) co-operating with the inner face (24) of the parallel walls (5, 5A) of the box (2),
   - and are provided, at the level of their side edges (30, 31) with feet (28, 29) locating themselves, upon fitment of the box onto said riders (8), in front of openings (32, 33) made in the parallel walls (5, 5A), in order to be mechanically forced into same.

2. Locking device according to claim 1, characterized in that the lips (21) are located, with respect to the parallel wings (10, 11), in planes substantially offset in the direction of the longitudinal median plane (22) of the riders (8), said lips (21) furthermore keeping a distance (23) coresponding to the inner distance defined by the parallel walls (5, 5A) of the box or boxes (2).

3. Locking device according to claim 2, characterized in that at the level of the recesses (26) made in front of the riders (8) in the outer face (25) of the parallel walls (5, 5A) is made a cut-out (39) serving as a passageway for the lip (21).

4. Locking device according to claim 1, characterized in that the transversal wall (14) of the riders (8) includes openings (34, 35) serving as passageways for positioning lips (36, 37) integral with the front edge (38) of the parallel walls (5, 5A) of the box (2).

FIG. 1

FIG. 2

FIG. 3

FIG. 4

FIG. 6

FIG. 5